# FASCICULE DE BREVET EUROPEEN

(11) **EP 2 475 511 B1**
(45) Date de publication et mention de la délivrance du brevet: **09.04.2014**
(21) Numéro de dépôt: 10747464.5
(22) Date de dépôt: 31.08.2010
(51) Int. Cl.: B29C 49/48, B29C 33/30

(54) **DISPOSITIF DE MOULAGE ÉQUIPÉ DE MOYENS COMMANDÉS DE FIXATION AVEC SERRAGE D'UN DEMI-MOULE PAR DES PÊNES DE FIXATION COULISSANTS**
FORMVORRICHTUNG MIT BEWEGLICHEN HALBSCHALEHALTEVORRICHTUNGEN DIE DIE HALBSCHALEN IN DEN FORMHÄLTERN FIXIEREN
MOLDING DEVICE PROVIDED WITH A CONTROLLED MEANS FOR CLAMPINGLY ATTACHING A HALF-MOLD BY MEANS OF SLIDABLE ATTACHMENT BOLTS

(30) Priorité: 07.09.2009 FR 0956080
(43) Date de publication de la demande: 18.07.2012
(73) Titulaire: Sidel Participations, 76930 Octeville sur Mer (FR)
(72) Inventeur: DUCLOS, Yves-Alban, F-76930 Octeville sur Mer (FR)
(74) Mandataire: Gevers France
(86) Numéro de dépôt international: PCT/EP2010/062675
(87) Numéro de publication internationale: WO 2011/026828

(56) Documents cités:
- WO-A1-96/33059
- DE-A1- 10 152 050
- FR-A1- 2 552 366
- US-A1- 2006 233 909

## Description

La présente invention concerne un dispositif de moulage pour une machine de fabrication de récipients, notamment des bouteilles.

La présente invention concerne plus particulièrement un dispositif de moulage pour une machine de fabrication de récipients, notamment des bouteilles, en matière thermoplastique par soufflage ou étirage-soufflage d'une préforme, le dispositif de moulage comportant :
- deux demi-moules dont chacun est pourvu d'une demi-empreinte et dont chacun comporte une face avant de joint et une face arrière ;
- deux porte-moules dont chacun est muni d'un logement destiné à recevoir un demi-moule associé dans une position montée dans laquelle la face arrière du demi-moule est en contact avec le fond du logement ; et
- au moins un pêne de fixation escamotable qui est monté coulissant dans au moins un porte-moule entre une position active dans laquelle il est étendu pour fixer de manière démontable le demi-moule associé en position montée avec serrage contre le fond du logement associé par appui d'au moins une face de blocage de chaque pêne de fixation contre une face de fixation associée du demi-moule, et une position escamotée dans laquelle il libère le demi-moule.

On connaît de l'état de la technique des dispositifs de moulage destinés à équiper des machines de fabrication de récipients, notamment mais non exclusivement des machines dites "rotatives" comportant un carrousel circonférentiellement pourvu d'un nombre déterminé de postes de soufflage identiques.

La fabrication de récipients en matière plastique, tels que des bouteilles, flacons, etc. y est effectuée à partir de préformes ou d'ébauches préalablement chauffées dans un four de conditionnement thermique. Selon le nombre d'empreinte des moules, une ou plusieurs préformes sont ainsi amenée(s) à un poste de la machine pour être introduite dans un dispositif de moulage auquel sont associés des moyens de soufflage ou d'étirage-soufflage.

De tels dispositifs de moulage comportent au moins un moule constitué de deux demi-moules supportés respectivement par deux porte-moules qui sont montés mobiles l'un par rapport à l'autre.

Chaque demi-moule est généralement fixé à un porte-moule associé de manière amovible par l'intermédiaire de moyens de fixation afin de permettre un démontage en vue d'un échange du moule, en particulier pour procéder à des fabrications de récipients de formes et/ou de dimensions différentes ou encore à leur remplacement en cas d'endommagement et/ou d'usure des demi-moules.

Pour réduire tant les coûts de fabrication que le temps nécessaire à un tel démontage du moule, on a déjà proposé dans le document EP-B1-0.821.641 différents perfectionnements aux dispositifs de moulage.

Selon les enseignements de ce document, des moyens de régulation de la température des empreintes de chaque demi-moule sont réalisés en une pièce distincte (appelée porte-coquille dans ce document) du demi-moule (appelé coquille dans ce document). Le porte-coquille est destiné à être fixé à demeure sur le porte-moule, tandis que le demi-moule muni de la demi-empreinte est apte à être solidarisée de manière amovible au porte-coquille par l'intermédiaire de moyens de fixation rapide. Cette configuration permet d'obtenir un demi-moule léger facilement manipulable par un opérateur seul.

Les moyens de fixation du demi-moule sur le porte-moule sont disposés sur les arêtes et les bords respectifs du demi-moule et du porte-coquille qui sont parallèles à l'axe principal de l'empreinte. Ces moyens de fixation comportent en particulier une patte de blocage, montée fixe ou mobile sur le porte-moule, débordant sur la face de joint du demi-moule pour assurer la fixation du demi-moule solidairement au porte-moule. Le serrage du demi-moule contre le fond du logement est obtenu par vissage rapide des pattes de blocage sur une face de joint du porte-moule.

Avec les moyens de fixation connus, les opérations de montage et de démontage sont mises en oeuvre par au moins un opérateur et requièrent l'utilisation d'outils, tels que des tournevis, pour démonter la barre de fixation pendant que les porte-moules sont en position ouverte.

Le document WO-A-2007/012308 propose d'obtenir le serrage du demi-moule contre le fond du logement par un jeu de ressorts qui sont intercalés entre un élément de commande et un élément de base qui porte les pattes de blocage. Le déplacement de l'élément de commande permet, sur une première partie de sa course, de commander le déplacement des pattes de blocage entre une position escamotée et une position active, puis, sur une deuxième partie de sa course, le serrage des pattes de blocage en position active contre le demi-moule par l'intermédiaire des ressorts.

De tels moyens de fixation et de serrage comportent toutefois de nombreuses pièces mobiles. Ces moyens de fixation sont donc complexes et onéreux à fabriquer.

En outre, les moyens de commande proposés dans ce document nécessitent l'utilisation et la manipulation d'un outil par l'opérateur chargé du montage.

Le document US-A1-2006/0.233.909 propose de monter un cavalier sur le bord du porte-moule. Ce cavalier comporte une patte munie d'une rampe qui permet de serrer le moule contre le fond du porte-moule.

Cependant, le dispositif de moulage n'est pas adapté pour le soufflage de récipients à partir de préformes.

En outre, le cavalier est une pièce rapportée qui doit être montée et démontée à chaque changement de moule à l'aide d'un outil. Le temps de montage/démontage n'est donc pas optimal.

On cherche donc à réduire encore le temps nécessaire au montage et/ou au démontage des demi-moules de manière à réduire encore les temps d'intervention à l'aide de moyens de fixation rapide simples et peu onéreux à fabriquer.

Dans ce but, l'invention propose un dispositif de moulage du type décrit précédemment, caractérisé en ce que chaque pêne et/ou le demi-moule associé comporte une rampe de serrage qui est inclinée de manière à appuyer le demi-moule contre le fond du logement lors du coulissement dudit pêne de fixation depuis sa position escamotée jusqu'à sa position active.

Selon d'autres caractéristiques de l'invention :
- chaque pêne de fixation comporte une rampe de serrage qui est inclinée de manière à appuyer le demi-moule contre le fond du logement lors du coulissement dudit pêne de fixation depuis sa position escamotée jusqu'à sa position active ;
- le logement comporte une entrée qui s'étend dans un plan transversal et qui est délimitée transversalement par un premier bord vertical et par un deuxième bord vertical ;
- chaque pêne de fixation est monté coulissant transversalement entre sa position active dans laquelle ledit pêne de fixation est en saillie en travers de l'entrée du logement, et sa position escamotée dans laquelle il est totalement rétracté par rapport à l'entrée du logement ;
- le coulissement de chaque pêne de fixation est commandé par des moyens de commande intégrés au porte-moule ;
- les moyens de commande comportent au moins un arbre vertical de transmission qui est monté rotatif dans le porte-moule, et lesdits moyens de commande comportent des moyens de transformation du mouvement de rotation de l'arbre de transmission en mouvement de coulissement d'au moins un pêne de fixation ;
- l'arbre de transmission est lié à au moins un pêne de fixation par un mécanisme excentrique qui transforme un mouvement de rotation de l'arbre de transmission en mouvement de coulissement dudit pêne de fixation ;
- l'arbre de transmission est lié audit pêne de fixation par un mécanisme excentrique à cadre ;
- l'arbre de transmission comporte un pignon qui coopère avec une crémaillère du pêne de fixation pour commander le coulissement du pêne de fixation ;
- l'arbre de transmission est un arbre coudé qui est articulé au pêne de fixation par l'intermédiaire d'une bielle pour transformer un mouvement de rotation de l'arbre de transmission en mouvement de coulissement du pêne de fixation ;
- les moyens de commande comportent au moins une poignée qui est destinée à être actionnée manuellement par un opérateur pour commander le coulissement de chaque pêne de fixation entre ses deux positions ;
- chaque poignée est formée par un bras qui est orthogonal à l'arbre de transmission et qui est fixé à une extrémité de l'arbre de transmission associé ;
- le dispositif de moulage comporte au moins deux pênes de fixation qui sont montés coulissant en bordure du premier bord de l'entrée du logement ;
- tous les pênes de fixation du premier bord sont commandés en coulissement par un premier arbre commun de transmission ;
- le dispositif de moulage comporte au moins une patte de blocage du demi-moule en position montée qui est portée de manière fixe par le porte-moule en bordure du deuxième bord opposé de l'entrée du logement ;
- le dispositif de moulage comporte au moins deux autres pênes de fixation escamotables qui sont montés coulissant en bordure du deuxième bord opposé de l'entrée du logement ;
- tous les pênes de fixation du deuxième bord sont commandés en coulissement par un deuxième arbre commun de transmission ;
- au moins un pêne de fixation est formé par une bille ;
- le dispositif de moulage comporte un dispositif de sûreté qui verrouille les pênes de fixation dans leur position active.

D'autres caractéristiques et avantages apparaîtront à la lecture de la description détaillée qui va suivre pour la compréhension de laquelle on se reportera aux dessins annexés parmi lesquels :
- la figure 1 est une vue en perspective qui représente un dispositif de soufflage réalisé selon les enseignements de l'invention et comportant deux porte-moules munis de leur demi-moule, les porte-moules étant en position ouverte ;
- la figure 2 est une vue en perspective qui représente les deux demi-moule de la figure 1 dans une position disjointe ;
- la figure 3 est une vue en perspective qui représente les deux demi-moules de la figure 2 en position jointe ;
- la figure 4 est une vue similaire à celle de la figure 1 qui représente les deux porte-moules dans une position fermée ;
- la figure 5 est une vue en perspective qui représente un porte-moule comportant un dispositif de fixation commandé en position escamotée et un demi-moule dans une position démontée ;
- la figure 6 est une vue de face qui représente le porte-moule de la figure 5 dans lequel le demi-moule est monté et fixé ;
- la figure 7 est une vue en coupe selon le plan de coupe 7-7 de la figure 6 qui représente un pêne de fixation en position active ;
- la figure 8 est une vue similaire à celle de la figure 6 qui représente le demi-moule monté mais pas fixé dans le porte-moule, le dispositif de fixation étant escamoté ;
- la figure 9 est une vue en coupe selon le plan de coupe 9-9 de la figure 8 qui représente le pêne de fixation en position escamotée ;
- la figure 10 est une vue en perspective éclatée qui représente un arbre de transmission des moyens de commande du dispositif de fixation et une barre de bordure du porte-moule dans laquelle il est destiné à être monté ;
- la figure 11 est une vue en perspective éclatée qui représente l'arbre monté dans la barre de bordure, les pênes destinés à être montés coulissants dans la barre de bordure et des vis de fixation de la barre de bordure sur le porte-moule ;
- la figure 12 est une vue en coupe selon le plan de coupe 12-12 de la figure 1 qui représente un dispositif de sûreté qui verrouille les pênes en position active.

Pour la suite de la description, des éléments présentant des fonctions similaires, analogues ou identiques seront désignés par des mêmes numéros de référence.

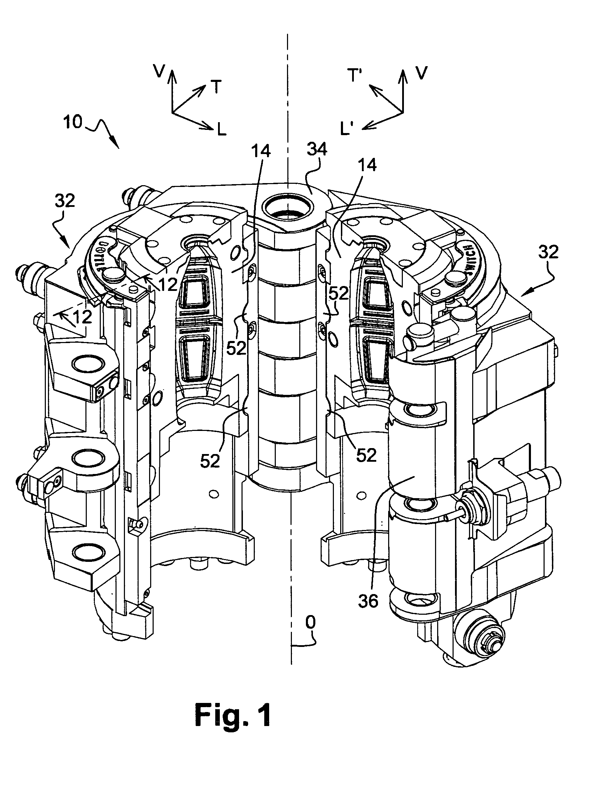

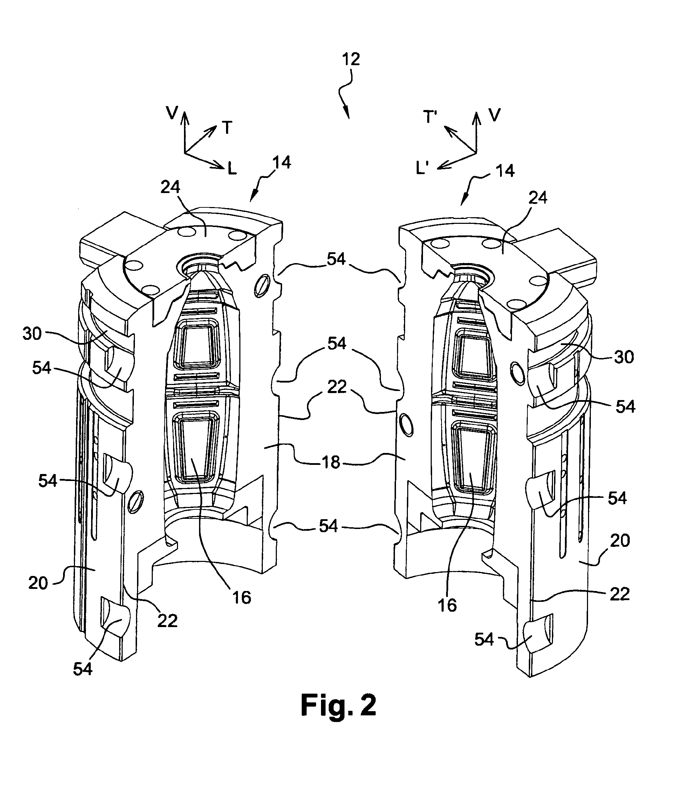

Pour la suite de la description, on adoptera à titre non limitatif pour chaque porte-moule 32 des orientations longitudinale, verticale et transversale indiquées par les trièdres "L,V,T" pour le premier porte-moule 32 agencé à gauche à la figure 1 et "L',V,T"' pour le deuxième porte-moule situé à droite à la figure 2. Les directions transversales "T" et "T'" et longitudinale "L" et "L"' sont ainsi fixes par rapport à chaque porte-moule 34. Pour chaque porte-moule 32, la direction longitudinale "L", "L'" est orientée depuis l'arrière vers l'avant en direction de l'autre porte-moule 32 lorsque les porte-moules 32 sont en position fermée.

On adoptera aussi les termes "intérieur", respectivement "extérieur", pour désigner une face ou une direction tournée vers l'intérieur du logement 38 d'un porte-moule, respectivement vers l'extérieur.

On a représenté à la figure 1, un dispositif de moulage 10 pour une machine (non représentée) de fabrication de récipients, en particulier de bouteilles, en matière thermoplastique par soufflage ou étirage-soufflage d'une préforme préalablement chauffée.

Le dispositif de moulage 10 représenté à la figure 1 ne constitue toutefois qu'un exemple de réalisation non limitatif du type de dispositif de moulage 10 susceptible de recevoir application de moyens de fixation réalisés selon les enseignements de l'invention.

Le dispositif de moulage 10 illustré à la figure 1 est plus particulièrement destiné à équiper un poste d'une machine de fabrication de type "rotative", c'est-à-dire comportant généralement un carrousel (non représenté) à la circonférence duquel sont disposés des postes comprenant chacun un dispositif de moulage 10 associé à des moyens de soufflage ou d'étirage-soufflage, encore appelé tuyère de soufflage.

Cependant, les moyens de fixation selon l'invention sont également susceptibles d'être mis en oeuvre dans une machine de fabrication de type linéaire (et non rotative).

S'agissant de moyens de soufflage ou d'étirage-soufflage, on se reportera par exemple au document FR-A-2.764.544 pour de plus amples détails.

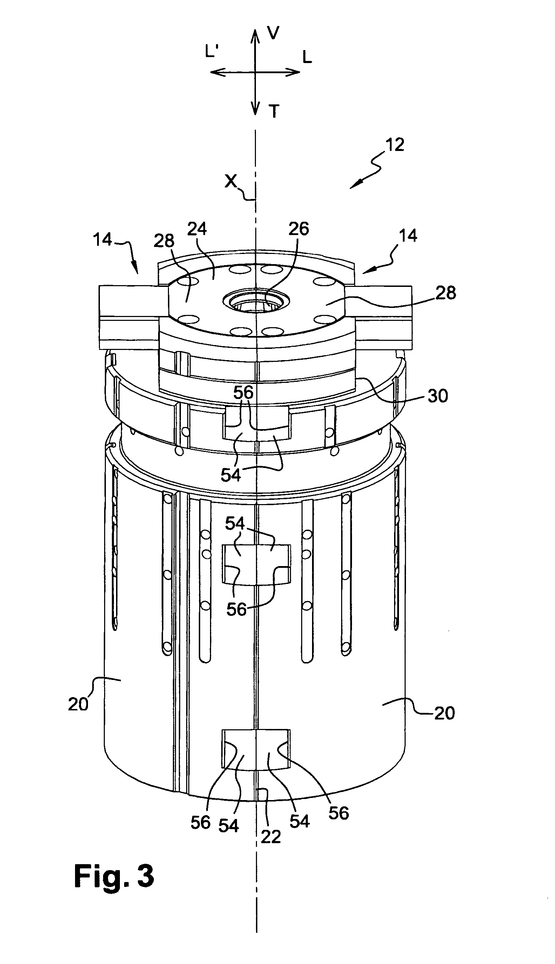

Comme on peut le voir en détail aux figures 2 et 3, le dispositif de moulage 10 comporte au moins un moule 12 constitué de deux demi-moules 14 qui sont identiques par symétrie par rapport à leur plan de joint. Le moule 12 présente ici une forme cylindrique coupée axialement en deux parties pour former chaque demi-moule 14.

Comme illustré à la figure 2, chaque demi-moule 14 comporte une demi-empreinte 16 du récipient final qui est réalisée en creux dans une face avant de joint 18. La face de joint 18 est ici une face plane verticale transversale qui est formée par la face de section du cylindre formant le moule 12.

Les demi-moules 14 sont susceptibles d'occuper une position disjointe, telle que représentée à la figure 2, dans laquelle les deux demi-moules 14 sont écartés l'un de l'autre, et une position jointe, telle que représentée à la figure 3, dans laquelle les deux demi-moules 14 sont joints ensemble par leur face de joint 18 pour former le moule 12.

Chaque demi-moule 14 comporte en outre une face arrière 20 qui est opposée à la face de joint 18, et qui présente globalement la forme d'un demi-cylindre de révolution sensiblement coaxial à l'axe principal vertical "X" de l'empreinte 16 du récipient.

Chaque demi-moule 14 présente deux arêtes 22 rectilignes d'orientation verticale qui s'étendent à la jonction entre sa face de joint 18 et sa face arrière 20.

Dans la position jointe, le moule 12 présente une face supérieure 24 horizontale circulaire présentant centralement une ouverture 26 destinée à permettre l'introduction de l'air de soufflage, voir d'une tige d'étirage.

De préférence, la face supérieure 24 de chaque demi-moule 14 est formée par deux plaques 28 distinctes, dont chacune est rapportée solidairement sur un demi-moule 14. L'extrémité inférieure d'une tuyère (non représentée) comprenant les moyens de soufflage ou d'étirage-soufflage est destinée à venir en contact avec la face supérieure 24 formée par les deux plaques 28.

Les demi-moules 14 comportent encore dans leur partie supérieure, juste en dessous de la face supérieure horizontale, une rainure 30 annulaire qui s'étend circonférentiellement de manière continue autour des deux demi-moules 14 lorsqu'ils sont joints.

Lorsque le récipient à fabriquer présente un fond de forme complexe, en particulier pétaloïde, des problèmes de démoulage sont alors susceptibles de survenir.

C'est la raison pour laquelle, on prévoit avantageusement un fond de moule (non représenté) séparé, distinct des demi-moules 14, ledit fond de moule comportant une empreinte du fond du récipient complémentaire des demi-empreintes 16.

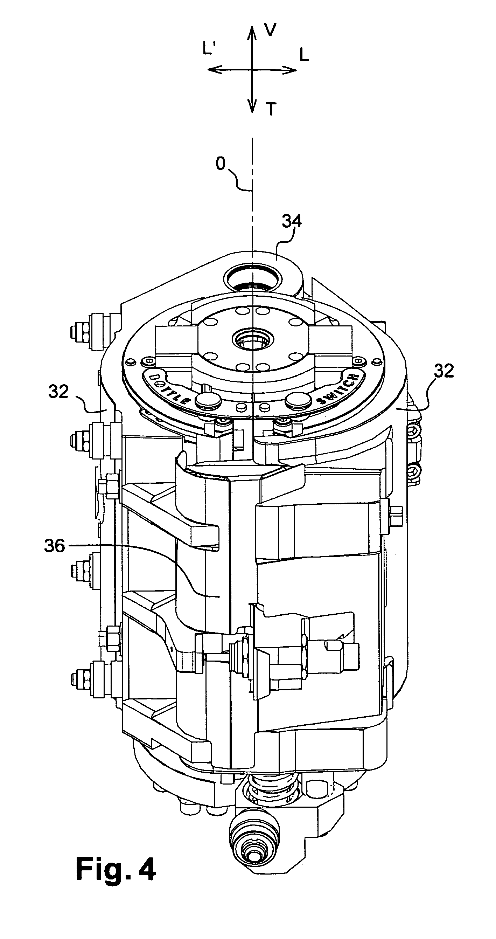

Chaque demi-moule 14 est destiné à être fixé de manière démontable sur un porte-moule 32 associé du dispositif de moulage 10. De tels porte-moules 32 sont représentés plus en détails aux figures 1 et 4.

Les deux porte-moules 32 sont montés mobiles l'un par rapport à l'autre entre une position fermée, telle que représentée à la figure 4, dans laquelle les deux demi-moules 14 sont joints pour former l'empreinte complète 16, et une position ouverte, telle que représentée à la figure 1, dans laquelle les deux demi-moules 14 sont disjoints, par exemple pour permettre l'extraction d'un récipient après soufflage.

Dans l'exemple représenté aux figures 1 et 4, les porte-moules 32 sont constitués sous la forme de deux structures porteuses montées articulées autour d'une charnière 34 commune d'axe "O" de pivotement vertical. La charnière 34 est généralement portée par une console (non représentée) qui est fixe par rapport au carrousel.

Les porte-moules 32 sont dès lors susceptibles de s'écarter mutuellement l'un de l'autre en pivotant respectivement autour de l'axe "O" et sont en conséquence montés pivotants entre leur position ouverte (figure 1) et leur position fermée (figure 4).

Comme représenté à la figure 1, lorsque les porte-moules 32 s'ouvrent depuis leur position fermée, ils s'écartent l'un de l'autre selon une direction longitudinale d'ouverture orientée vers l'arrière qui est orthogonale à la face de joint 18 des demi-moules 14.

En raison de la cinématique des porte-moules 32, un tel dispositif de moulage 10 est encore appelé moule "portefeuille" (ou *"book-like opening" en anglais).*

Selon une variante non représentée de l'invention, le dispositif de moulage comporte deux porte-moules montés mobiles en translation l'un par rapport à l'autre selon une direction longitudinale, entre une position ouverte et une position fermée.

Le dispositif de moulage 10 comporte encore un verrou 36 qui est agencé transversalement diamétralement à l'opposé de la charnière 34 par rapport à l'axe vertical "X" de l'empreinte 16 comme représenté à la figure 4.

Un tel verrou 36 est également connu et ne sera donc pas décrit plus en détail. Ce verrou 36 présente notamment pour fonction de prévenir toute ouverture inopinée lors du soufflage pour lequel les pressions peuvent atteindre 40 bars selon les applications.

Pour de plus amples détails sur la structure et le fonctionnement d'un tel verrou 36, on pourra par exemple se reporter au document FR-A-2.646.802 qui décrit globalement un verrou similaire.

Les porte-moules 32 et les demi-moules 14 étant sensiblement de forme identique par symétrie par rapport au plan de joint du moule 12, on ne détaillera par la suite que le porte-moule 32 agencé à gauche à la figure 1, la description étant applicable à l'autre par symétrie.

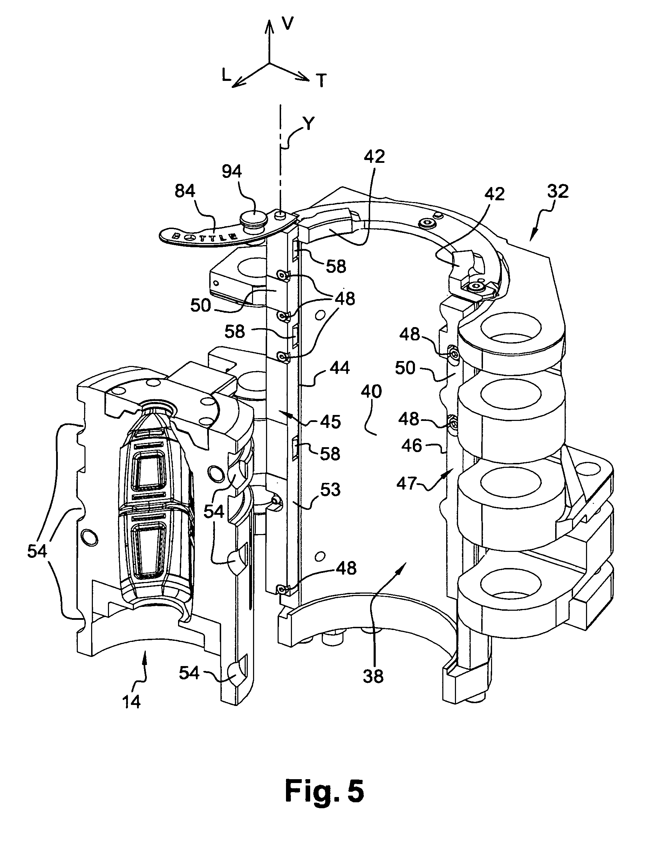

Comme représenté à la figure 5, le demi-moule 14 est plus particulièrement destiné à être reçu dans un logement 38 du porte-moule 32 associé pour occuper une position montée.

Le dispositif de moulage 10 comporte des moyens de fixation qui sont aptes à fixer de manière démontable chaque demi-moule 14 en position montée dans le logement 38 du porte-moule 32 associé. Ces moyens seront décrits plus en détail par la suite.

Le logement 38 est délimité longitudinalement vers l'arrière par un fond 40 concave de forme hémicylindrique complémentaire de la face arrière 20 du demi-moule 14.

En outre, le logement 38 est délimité verticalement vers le haut par la face inférieure d'un rebord 42 qui s'étend radialement vers l'intérieur en saillie par rapport au fond 40 du logement 38. La rainure 30 du demi-moule 14 est destinée à être emboîtée longitudinalement avec ce rebord 42 pour permettre le positionnement et le maintien vertical du demi-moule 14 par rapport au porte-moule 32.

L'entrée du logement 38 est en outre délimitée transversalement par un premier bord 44 vertical, d'une part, et par un deuxième bord 46 vertical d'autre part. Le bord situé à proximité de la charnière 34 sera appelé bord 46 proximal tandis que le bord éloigné de la charnière 34 sera appelé bord 44 distal.

Chacun des bords 44, 46, respectivement distal et proximal, du logement 38 est bordé d'une barre verticale de bordure distale 45, respectivement proximale 47, qui est rapportée et fixée sur la structure du porte-moule 32 par l'intermédiaire de moyens de fixation rigides tels que des vis 48. Chaque barre de bordure 45, 47 présente une section horizontale de contour rectangulaire ou carré.

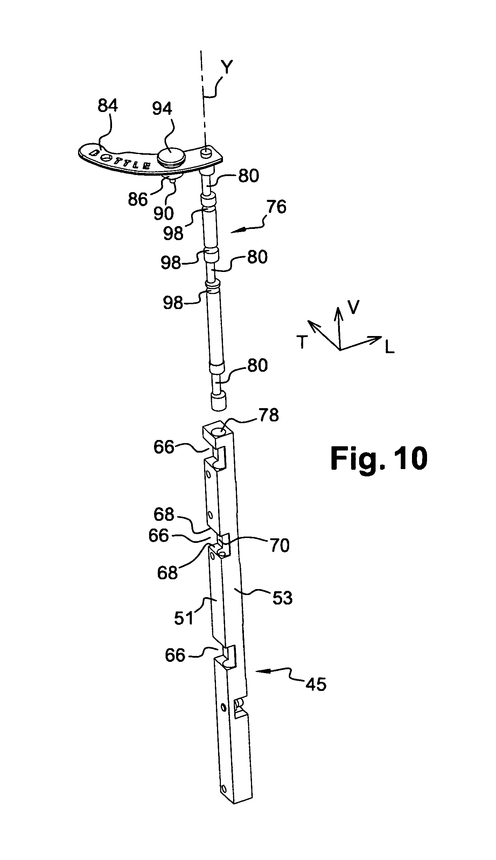

Chaque barre de bordure 45, 47 est notamment délimitée longitudinalement par une face verticale transversale avant d'accostage 50, visible à la figure 5, et par une face verticale transversale arrière de contact 51, visible à la figure 10, par laquelle elle est fixé au porte-moule 32. Chaque barre de bordure 45, 47 est aussi délimitée transversalement par deux faces latérales 53 intérieure et extérieure par rapport au logement 38.

La face d'accostage 50 de chaque barre de bordure 45, 47 est destinée à venir en contact plan avec la face d'accostage 50 d'une barre de bordure 45, 47 en vis-à-vis de l'autre porte-moule 32 lorsque les porte-moules 32 sont en position fermée. Dans la position montée du demi-moule 14, sa face de joint 18 est agencée sensiblement dans le même plan que les faces d'accostage 50 des barres de bordure 45, 47 qui bordent le logement 38, comme cela est particulièrement visible à la figure 1.

Par ailleurs, le porte-moule 32 est muni de moyens (non représentés) de régulation de la température de l'empreinte 16 qui sont formés par des conduites formées dans l'épaisseur du fond 40 du logement 38 et dans lesquelles circule un fluide caloporteur.

Après fixation du demi-moule 14 en position montée dans le porte-moule 32, la face arrière 20 du demi-moule 14 et le fond 40 du logement 38 du porte-moule 32 sont en contact serré, plaqués l'un contre l'autre. Ainsi, la transmission de chaleur entre le demi-moule 14 et le porte-moule 32 est obtenue par conduction entre la face arrière 20 du demi-moule 14 et le fond 40 du logement 38.

Le dispositif de moulage 10 comporte des moyens de fixation aptes à fixer de manière démontable au porte-moule 32 chaque demi-moule 14 occupant une position montée. Ces moyens de fixation sont aussi aptes à serrer le demi-moule 14 contre le fond 40 du logement 38 associé du porte-moule 32 pour assurer le plaquage de la face arrière 20 du demi-moule 14 contre le fond 40 du logement 38. Ainsi, il ne reste pas une pellicule d'air susceptible d'isoler thermiquement le demi-moule 14 du porte-moule 32.

Par la suite, on décrit les moyens de fixation pour un seul porte-moule 32, les moyens de fixation étant identiques pour l'autre porte-moule 32.

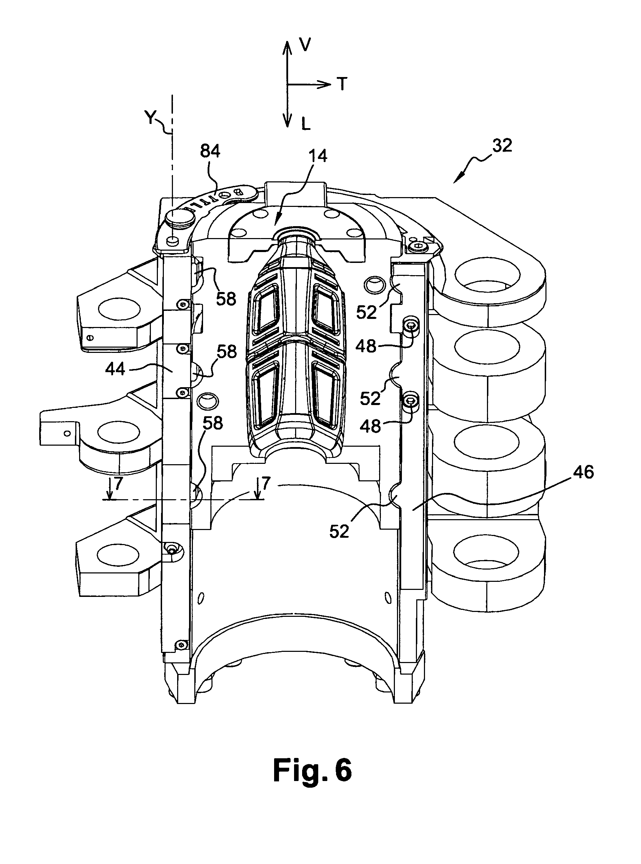

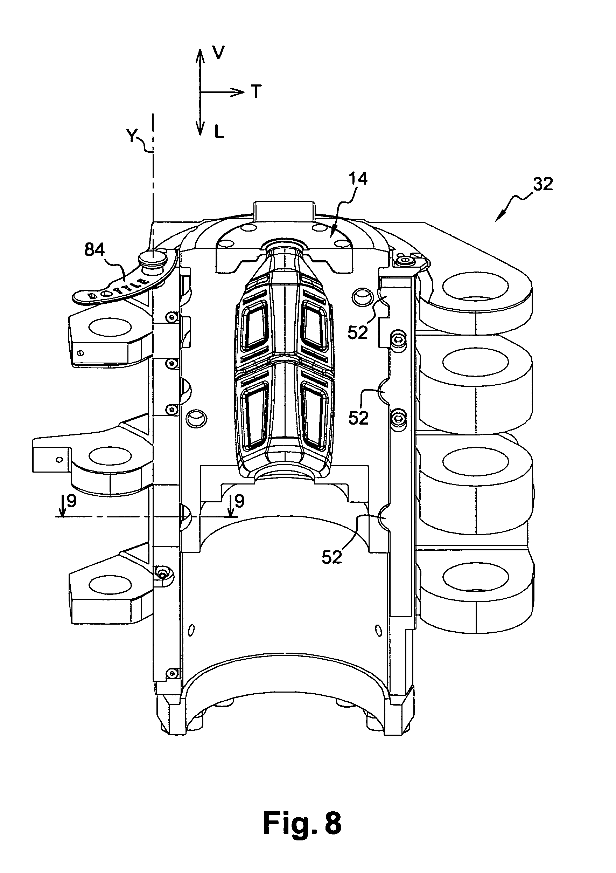

Les moyens de fixation sont au moins en partie commandés. Dans l'exemple représenté aux figure 6 et 8, les moyens commandés de fixation sont agencés uniquement en bordure du bord 44 distal du logement 38, l'autre bord 46 proximal étant équipé de moyens passifs de fixation.

Dans l'exemple représenté aux figures 6 et 8, les moyens de fixation passifs comportent au moins une patte de blocage 52 du demi-moule 14 en position montée qui est portée de manière fixe par le porte-moule 32 en bordure du bord 46 proximal.

Les pattes de blocage 52 sont ici au nombre de trois et elles sont réparties le long du bord 46 proximal du logement 38. Elles font saillie transversalement vers l'intérieur par rapport au bord 46 proximal du fond 40 du logement 38.

En outre, comme cela apparaît clairement à la figure 1, les pattes de blocage 52 sont agencées en affleurement ou en retrait longitudinalement vers l'arrière par rapport à la face de joint 18 du demi-moule 14 en position montée afin d'éviter toute interférence lors de la fermeture du moule 12.

Chaque patte de blocage 52 est destinée à être reçues dans une feuillure 54 réalisée dans l'arête 22 correspondante du demi-moule 14. Les pattes de blocage 52 sont plus particulièrement destinées à être appuyées longitudinalement contre une face transversale verticale avant de fixation 56 du demi-moule 14 qui est agencée en fond de feuillure 54.

De manière connue, les pattes de blocage 52 sont toutes portées par la barre de bordure proximale 47 commune, parfois désignée par le terme "blackbar". La barre de bordure proximale 47 est fixée à demeure sur le porte-moule 32, par exemple aux moyens des vis 48. Ces pattes de blocage 52 sont ainsi destinées à rester en place pendant les opérations de changement de demi-moule 14.

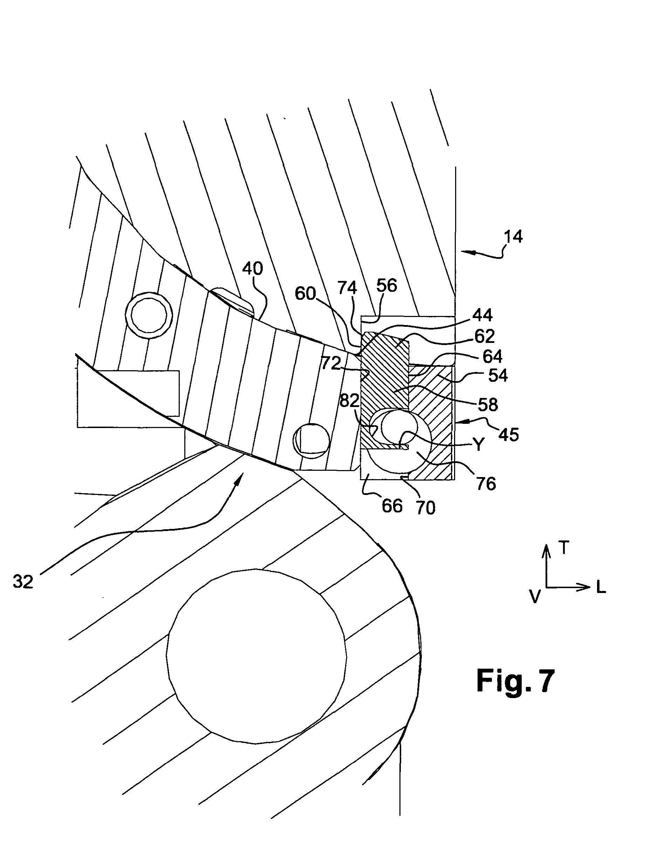

Les moyens commandés de fixation comportent au moins un pêne 58 de fixation qui est monté mobile dans le porte-moule 32 entre :
- une position active, telle que représentée aux figures 6 et 7, dans laquelle il est étendu pour fixer de manière démontable le demi-moule 14 en position montée avec serrage contre le fond 40 du logement 38 associé par appui d'au moins une face de blocage 60 de chaque pêne 58 de fixation contre une face de fixation 56 associée du demi-moule 14 ; et
- une position escamotée dans laquelle le pêne 58 de fixation libère l'entrée du logement 38 pour permettre le passage du demi-moule 14.

Comme pour les pattes de blocage 52, dans sa position active, chaque pêne 58 de fixation est agencé en retrait longitudinalement vers l'arrière, ou au moins en affleurement, par rapport à la face de joint 18 du demi-moule 14.

De plus, chaque pêne 58 de fixation est avantageusement monté mobile de manière à ne dépasser longitudinalement vers l'avant la face de joint 18 du demi-moule 14 en aucun point de sa trajectoire entre ses deux positions. Ceci permet de commander le déplacement du pêne 58 de fixation même lorsque les porte-moule 32 sont en position fermée.

Un tronçon d'extrémité transversale intérieure libre 62 de chaque pêne 58 de fixation est destiné à être reçu dans une feuillure 54 associée réalisée dans l'arête 22 correspondante du demi-moule 14 lorsque le demi-moule 14 est en position montée. Le fond transversal vertical de chaque feuillure 54 forme une face de fixation 56 du demi-moule 14.

En variante, la feuillure est remplacée par une mortaise réalisée dans le demi-moule.

Le porte-moule 32 comporte au moins deux pênes de fixation 58 qui sont agencés en bordure du bord 44 distal de l'entrée du logement 38. Les pênes de fixation 58 sont ici au nombre de trois, et ils sont répartis le long du bord 44 distal de l'entrée du logement 38.

Tous les pênes de fixation 58 présentent une apparence identique dans le mode de réalisation représenté aux figures. On ne décrira donc qu'un seul pêne 58 de fixation par la suite.

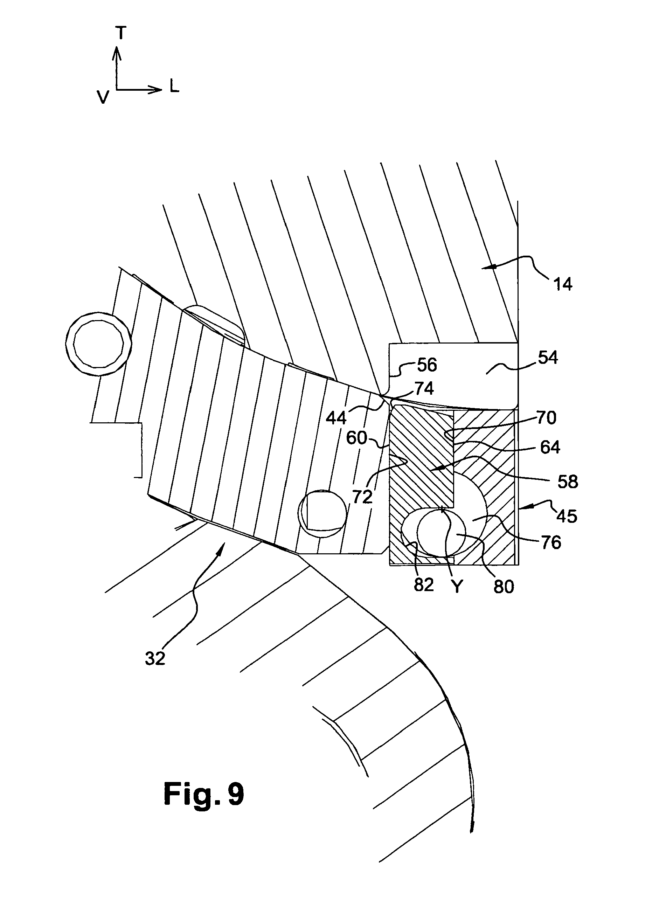

En se référant aux figures 7 et 9, le pêne 58 de fixation présente ici une forme globalement parallélépipédique. Il est délimité longitudinalement par une face verticale arrière plane formant la face de blocage 60 et par une face verticale avant plane 64.

Comme cela est représenté aux figures 7, 9 et 10, chaque pêne 58 de fixation est plus particulièrement monté coulissant transversalement dans un passage 66 de pêne associé réalisé dans la première barre de bordure distale 45 qui débouche transversalement au moins en direction de l'intérieur du logement 38.

Dans le mode de réalisation représenté à la figure 10, chaque passage 66 de pêne est délimité verticalement par deux face horizontales de guidage 68, et longitudinalement vers l'avant par une face avant de guidage 70. Pour faciliter le montage des pênes de fixation 58, comme cela sera expliqué par la suite, le passage 66 de pêne est débouchant dans la face arrière de contact 51 de la barre de bordure distale 45.

Ainsi, comme représenté aux figures 7 et 9, le pêne 58 de fixation est aussi guidé en coulissement transversal par une face vertical arrière 72 du porte-moule 32 qui est agencée dans le plan vertical transversal de l'entrée du logement 38. Ainsi, chaque pêne 58 de fixation est agencé coulissant en bordure du bord 44 distal de l'entrée du logement 38.

Dans sa position active (figure 7), le pêne 58 de fixation est en saillie transversalement par rapport au bord 44 distal associé de l'entrée du logement 38. Dans sa position escamotée (figure 9), le pêne 58 de fixation est totalement rétracté par rapport audit bord 44 distal de l'entrée du logement 38.

Lorsque le demi-moule 14 est monté mais pas encore fixé dans le logement 38, chaque face de fixation 56 du demi-moule 14 du côté distal est agencée légèrement longitudinalement vers l'avant par rapport à la face de blocage 60 du pêne 58 de fixation.

Comme cela est particulièrement visible aux figures 7 et 9, chaque pêne 58 de fixation comporte une rampe de serrage 74 qui est inclinée de manière à appuyer la face de fixation 56 associée en direction du fond 40 du logement 38 lors du coulissement dudit pêne 58 de fixation depuis sa position escamotée jusqu'à sa position active. Ainsi, chaque face de fixation 56 côté distal du demi-moule 14 est alors légèrement reculée longitudinalement vers l'arrière de manière à être appuyée contre la face de blocage 60 du pêne 58 de fixation.

La rampe de serrage 74 est formée par un biseau formé dans le bord vertical d'extrémité transversale intérieure de la face de blocage 60. La rampe de serrage 74 présente ici un aspect arrondi.

En variante, la rampe de serrage est portée par le demi-moule.

Selon une autre variante non représentée de l'invention, le pêne et le demi-moule sont tous deux équipés d'une rampe de serrage associée. Les deux rampes coopèrent alors en glissant mutuellement l'une sur l'autre pour serrer le demi-moule au fond du logement.

Par ailleurs, le coulissement de chaque pêne 58 de fixation est commandé par des moyens de commande qui sont intégrés au porte-moule 32.

Comme représenté à la figure 10, les moyens de commande comportent un arbre de transmission 76 qui est monté rotatif dans le porte-moule 32 et qui s'étend verticalement. L'arbre de transmission 76 est ici reçu dans un trou vertical 78 réalisé dans l'extrémité supérieure de la barre de bordure distale 45. Le trou vertical forme ainsi un palier 78 pour permettre à l'arbre de transmission 76 de tourner autour d'un axe de rotation vertical "Y".

Tous les pênes de fixation 58 du bord 44 distal sont commandés en coulissement par l'arbre commun de transmission 76. A cet effet, le palier 78 traverse chevauche les trois passages de pêne 66 en débouchant dans les faces horizontales de guidage 68 à cheval sur la face avant de guidage 70.

L'arbre de transmission 76 est lié à chaque pêne 58 de fixation par un mécanisme excentrique qui transforme un mouvement de rotation de l'arbre de transmission 76 en mouvement de coulissement des pênes de fixation 58. Plus particulièrement, l'arbre de transmission 76 est ici lié à chaque pêne 58 de fixation par un mécanisme dit "excentrique à cadre".

L'arbre de transmission 76 comporte ainsi trois cames 80 qui sont formées par des tronçons cylindrique de révolution d'axe vertical qui sont agencés de manière excentrique par rapport à l'axe de rotation "Y" de l'arbre de transmission 76. Ces cames 80 seront donc appelées "tronçons excentriques 80" par la suite.

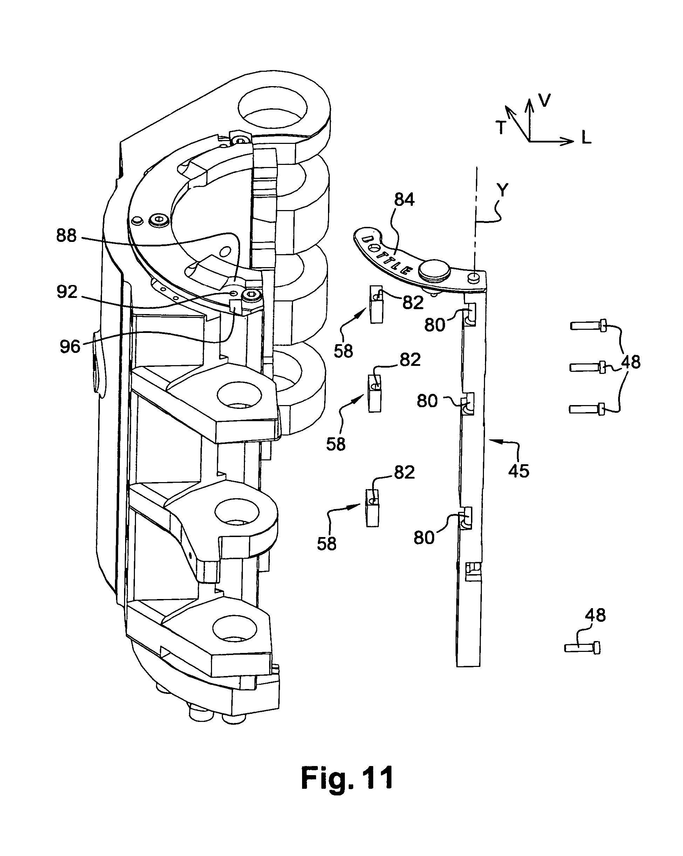

Les tronçons excentriques 80 sont agencés en coïncidence avec les passages de pêne 66 lorsque l'arbre de transmission 76 est monté par insertion dans son palier 78, comme cela est illustré à la figure 11.

Comme représenté au figures 7 et 9, chaque tronçon excentrique 80 présente ici un diamètre qui coïncide en dimension et en position avec un rayon de l'arbre de transmission 76.

Chaque pêne 58 de fixation comporte dans sa face avant 64 une rainure 82 verticale débouchant verticalement dans les deux sens qui est destinée à recevoir un tronçon excentrique 80 correspondant de l'arbre de transmission 76. Ceci est par exemple illustré plus précisément aux figures 7 et 9.

La rainure 82 présente plus particulièrement une largeur transversale sensiblement égale au diamètre du tronçon excentrique 80 et une profondeur longitudinale qui permet le coulissement longitudinal du tronçon excentrique 80 dans la rainure 82 pendant la rotation de l'arbre de transmission 76 sur au moins un demi-tour.

L'arbre de transmission 76 est ainsi lié à chaque pêne 58 de fixation par un mécanisme excentrique à cadre qui transforme le mouvement de rotation de l'arbre de transmission 76 en mouvement de coulissement transversal des pênes de fixation 58. La rotation de l'arbre de transmission 76 commande aussi bien l'escamotage que l'extension du pêne 58 de fixation entre ses deux positions.

Selon une variante non représentée de l'invention, les moyens de transformation du mouvement de rotation de l'arbre en mouvement de coulissement du pêne de fixation sont formés par un pignon porté par l'arbre qui coopère avec une crémaillère solidaire en coulissement du pêne de fixation pour commander le coulissement du pêne de fixation.

Selon une autre variante non représentée de l'invention, l'arbre de transmission est un arbre coudé qui est articulé au pêne de fixation par l'intermédiaire d'une bielle pour transformer un mouvement de rotation de l'arbre en mouvement de coulissement du pêne de fixation.

Selon encore une autre variante non représentée de l'invention, l'arbre porte une came qui commande activement le mouvement de coulissement du pêne vers une seule position, le pêne étant rappelé élastiquement vers son autre position.

Par ailleurs, les moyens de commande sont ici destinés à être commandés manuellement par un opérateur sans recourir à un outil individuel. A cet effet, comme représenté par exemple aux figures 6 et 8, les moyens de commande comportent au moins une poignée 84 qui est destinée à être actionnée manuellement par un opérateur pour commander le coulissement de chaque pêne 58 de fixation entre ses deux positions.

La poignée 84 est ici formée par un bras qui s'étend orthogonalement à l'arbre de transmission 76 et qui est fixé à l'extrémité supérieure de l'arbre de transmission 76 de manière solidaire en rotation autour de l'axe vertical de rotation "Y" avec l'arbre de transmission 76. A cet effet, l'extrémité supérieure de l'arbre de transmission 76 dépasse du trou vertical 78 de la barre de bordure distale 45.

Le bras formant la poignée 84 est agencé au-dessus d'une face supérieure du porte-moule 32.

Le bras formant la poignée 84 est suffisamment long pour permettre à l'opérateur d'appliquer manuellement un couple nécessaire au serrage du demi-moule 14 au fond 40 du logement 38. Le couple est aussi suffisant pour lutter contre le frottement de la face de blocage 60 de chaque pêne 58 de fixation contre la face de fixation 56 associée du demi-moule 14 lors de l'escamotage des pênes de fixation 58 pour démonter le demi-moule 14.

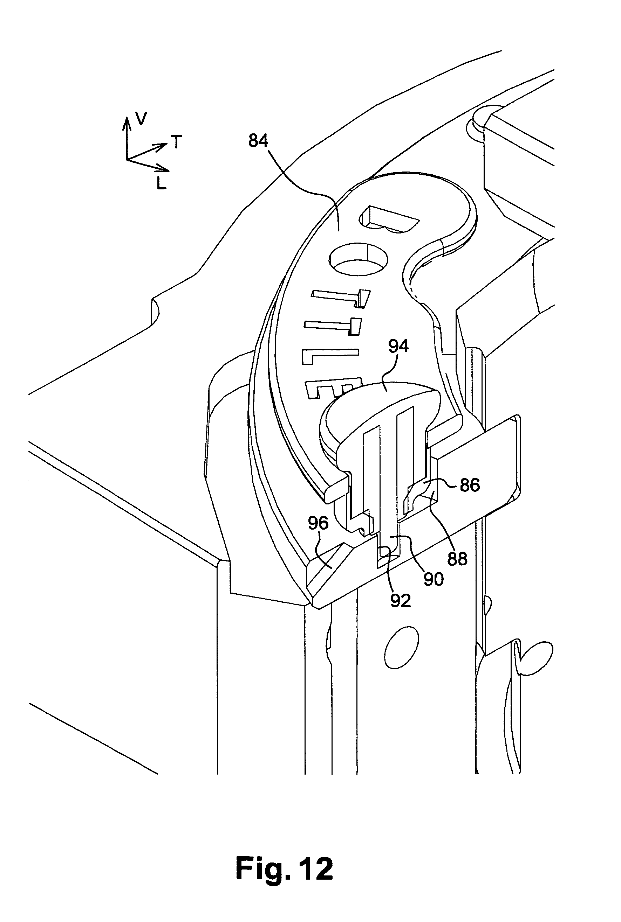

En outre, comme cela est représenté à la figure 12, un doigt d'indexation 86 s'étend verticalement vers le bas sous le bras formant la poignée 84. Le doigt d'indexation 86 est susceptible de venir en butée contre une face d'épaulement 88 verticale du porte-moule 32 lorsque les pênes de fixation 58 sont dans leur position active. L'opérateur chargé d'actionner le dispositif de verrouillage est ainsi informé par le contact du doigt d'indexation 86 avec la face d'épaulement 88 que les pênes de fixation 58 sont dans leur position active.

Ainsi, en position active des pênes, le bras formant la poignée 84 est repoussé au-dessus du porte-moule 32 de manière à être accessible même lorsque les porte-moules 32 sont en position fermée. Dans cette position, telle que représentée à la figure 6, le bras formant la poignée 84 ne dépasse pas radialement vers l'extérieur par rapport au contour extérieur du porte-moule 32.

En variante, et en se référant à la figure 4, l'extrémité du bras qui est fixée à l'arbre de transmission est conformée de manière que l'arbre puisse être tourné vers la position escamotée des pênes de fixation même en position fermée des porte-moule. Ladite extrémité du bras présente par exemple une forme de demi-disque qui permet de tourner l'arbre de transmission sans interférer avec le bras de l'autre porte-moule.

Pour éviter que les moyens de commande ne soient déclenchés de manière intempestive lorsque le demi-moule 14 est fixé sur le porte-moule 32, il comporte un dispositif de sûreté pour verrouiller les pênes de fixation 58 dans leur position active.

Le dispositif de sûreté est ici formé par une cheville 90 d'axe vertical qui est montée sur le bras formant la poignée 84 de l'arbre de transmission 76. La cheville 90 est plus particulièrement montée coulissante verticalement dans le doigt d'indexation 86 entre une position basse dans laquelle elle est susceptible d'être insérée dans un orifice complémentaire de verrouillage 92 du porte-moule 32 lorsque les pênes de fixation 58 sont dans leur position active, et une position haute dans laquelle la cheville 90 est totalement extraire de l'orifice de verrouillage 92.

En outre, l'extrémité supérieure de la cheville 90 est reliée à un bouton 94 qui permet à l'opérateur de tirer la cheville 90 vers sa position haute pour permettre de tourner l'arbre de transmission 76 de manière à commander les pênes de fixation 58 vers leur position escamotée.

Avantageusement, la cheville 90 est rappelée élastiquement dans sa position basse afin d'automatiser le dispositif de sûreté, par exemple par un ressort (non représenté) qui est agencé autour de la cheville 90, dans une chambre cylindrique interne du doigt 86. Le ressort prend appui sur une paroi inférieure interne du doigt, d'une part, et sur une paroi inférieure du bouton 94, d'autre part.

Le porte-moule 32 comporte en outre un plan incliné 96 qui est agencé sur la trajectoire de la cheville 90 lors de la rotation de l'arbre de transmission 76 vers la position active des pênes de fixation 58. Ce plan incliné 96 permet de commander automatiquement la cheville 90 vers sa position haute lors de la rotation de l'arbre de transmission 76 vers la position active des pênes de fixation 58. Ainsi, l'extrémité inférieure libre de la cheville 90 est susceptible de glisser automatiquement le long du plan incliné 96, puis d'un plan horizontal jusqu'à l'orifice de verrouillage 92 dans lequel elle est rappelée élastiquement dans sa position basse.

Lors du montage des moyens commandés de fixation sur le porte-moule 32, comme représenté à la figure 10, la barre de bordure distale 45 est démontée du porte-moule 32. L'arbre de transmission 76 est tout d'abord inséré verticalement dans le palier 78 de la barre de bordure distale 45 jusqu'à ce le bras formant la poignée 84 vienne en butée.

Les pênes de fixation 58 sont ensuite insérés longitudinalement dans les passages de pêne 66 ouverts dans la face arrière de contact 51, avant que la barre de bordure distale 45 ne soit fixée au porte-moule 32 par les vis de fixation 48. Cette opération est illustrée à la figure 11. Les pênes de fixation 58 sont ainsi prisonniers dans leur passage 66 de pêne par accrochage avec les tronçons excentriques 80.

Les tiges desdites vis 48 coopèrent aussi avec des gorges annulaires 98 de l'arbre de transmission 76, visibles à la figure 10, pour retenir verticalement l'arbre de transmission 76 en position dans la barre de bordure distale 45.

Lors d'une opération de changement de moule 12, l'opérateur procède d'abord au démontage d'un premier moule 12.

Il écarte tout d'abord les porte-moules 32 équipés d'un premier moule 12 dans leur position ouverte.

Puis, il saisit le bras formant la poignée 84 du dispositif commandé de fixation en tirant sur la cheville 90 pour pouvoir faire tourner l'arbre de transmission 76 dans un premier sens antihoraire de déverrouillage.

Le pêne 58 de fixation étant en position active, comme représentée à la figure 7, la rotation de l'arbre de transmission 76 dans un sens antihoraire appuie le tronçon excentrique 80 contre la paroi externe de la rainure 82, provoquant ainsi le coulissement transversal du pêne 58 de fixation vers sa position escamotée.

Durant le coulissement du pêne 58 de fixation, la profondeur de la rainure 82 est telle que le tronçon excentrique 80 coulisse longitudinalement par rapport au pêne 58 de fixation sans agir longitudinalement sur le pêne 58 de fixation.

L'arbre de transmission 76 et son bras formant la poignée 84 sont alors dans la position représentée à la figure 8. Les pênes de fixation 58 sont ainsi en position escamotée.

Le demi-moule 14 du premier moule 12 à changer étant libéré et desserré, l'opérateur saisi le demi-moule 14 pour le retirer selon un premier mouvement de pivotement autour de son axe vertical "X" pour dégager le demi-moule 14 des pattes de blocage 52 fixe, puis selon un mouvement de translation longitudinale vers l'avant du demi-moule 14 ainsi pivoté.

Le demi-moule 14 du deuxième moule 12 de remplacement est ensuite monté sur le porte-moule 32 selon des mouvements inverses de translation puis de pivotement.

Lors du coulissement de chaque pêne 58 de fixation depuis sa position escamotée vers sa position active, l'arbre de transmission 76 est tourné dans un sens horaire de manière que le tronçon excentrique 80 appuie sur la paroi intérieure de la rainure 82 pour provoquer le coulissement de chaque pênes de fixation 58.

La rampe de serrage 74 permet le serrage de la face arrière 20 du demi-moule 14 contre le fond 40 du logement 38, puis la face de blocage 60 permet d'assurer le serrage.

Lors de cette opération, la cheville 90 est commandée automatiquement dans sa position haute par le plan incliné 96. La cheville 90 est ensuite rappelée élastiquement dans sa position basse dans l'orifice de verrouillage 92 lorsque le doigt d'indexation 86 arrive en butée contre la face d'épaulement 88 du porte-moule 32. Les pênes de fixation 58 sont alors en position active.

L'opérateur est ainsi susceptible de réaliser le montage et le démontage d'un demi-moule 14 de manière simple et rapide, sans utiliser d'outils supplémentaires.

Selon une variante non représentée de l'invention, la rotation de l'arbre est commandée automatiquement par des moyens motorisés.

Selon une autre variante non représentée de l'invention, les pattes de blocage du bord proximal de l'entrée du logement sont remplacées par des moyens de verrouillage à pênes escamotables similaires à celui qui vient d'être décrit pour le bord distal. Avantageusement, tous les pênes de fixation du bord proximal sont commandés en coulissement par un deuxième arbre commun de transmission.

Avantageusement, selon cette dernière variante, le logement du porte-moule est conçu de manière que le demi-moule soit monté et démonté de son logement par un unique mouvement de translation parallèle à l'ouverture du moule formé par les deux demi-moules, ici par un mouvement longitudinal. Ainsi, les deux bords du logement sont libérés simultanément par les pênes de fixation. Il n'est alors plus nécessaire de faire pivoter le demi-moule 14 lors de son montage et de son démontage.

Selon encore une autre variante non représentée de l'invention, chaque pêne est formé par une bille prisonnière de manière mobile dans le passage 66 de pêne. Ainsi, seule une calotte de la bille dépasse en saillie du passage de pêne lorsque le pêne est en position active.

## Revendications

1. Dispositif de moulage (10) pour une machine de fabrication de récipients, notamment des bouteilles, en matière thermoplastique par soufflage ou étirage-soufflage d'une préforme, le dispositif de moulage (10) comportant :
- deux demi-moules (14) dont chacun est pourvu d'une demi-empreinte (16) et dont chacun comporte une face avant de joint (18) et une face arrière (20) ;
- deux porte-moules (32) dont chacun est muni d'un logement (38) destiné à recevoir un demi-moule (14) associé dans une position montée dans laquelle la face arrière (20) du demi-moule (14) est en contact avec le fond (40) du logement (38) ; et
- au moins un pêne de fixation (58) escamotable qui est monté coulissant dans au moins un porte-moule (32) entre une position active dans laquelle il est étendu pour fixer de manière démontable le demi-moule (14) associé en position montée avec serrage contre le fond (40) du logement (38) associé par appui d'au moins une face de blocage (60) de chaque pêne de fixation (58) contre une face de fixation (56) associée du demi-moule (14), et une position escamotée dans laquelle il libère le demi-moule (14),
- chaque pêne de fixation (58) comporte une rampe de serrage (74) qui est inclinée de manière à appuyer le demi-moule (14) contre le fond (40) du logement (38) lors du coulissement dudit pêne de fixation (58) depuis sa position escamotée jusqu'à sa position active ;
**caractérisé en ce que** le logement (38) comporte une entrée qui s'étend dans un plan transversal et qui est délimitée transversalement par un premier bord (44) vertical et par un deuxième bord (46) vertical,
et **en ce que** chaque pêne de fixation (58) est monté coulissant transversalement entre sa position active dans laquelle ledit pêne de fixation (58) est en saillie en travers de l'entrée du logement (38), et sa position escamotée dans laquelle il est totalement rétracté par rapport à l'entrée du logement (38).

2. Dispositif (10) selon la revendication précédente, **caractérisé en ce que** le coulissement de chaque pêne de fixation (58) est commandé par des moyens de commande intégrés au porte-moule (32).

3. Dispositif (10) selon la revendication précédente, **caractérisé en ce que** les moyens de commande comportent :
- au moins un arbre vertical de transmission (76) qui est monté rotatif dans le porte-moule (32) ; et
- des moyens (80, 82) de transformation du mouvement de rotation de l'arbre de transmission (76) en mouvement de coulissement d'au moins un pêne de fixation (58).

4. Dispositif (10) selon la revendication précédente, **caractérisé en ce que** l'arbre de transmission (76) est lié à au moins un pêne de fixation (58) par un mécanisme excentrique (80, 82) qui transforme un mouvement de rotation de l'arbre de transmission (76) en mouvement de coulissement dudit pêne de fixation (58).

5. Dispositif (10) selon la revendication précédente, **caractérisé en ce que** l'arbre de transmission (76) est lié audit pêne de fixation (58) par un mécanisme excentrique à cadre (80, 82).

6. Dispositif (10) selon la revendication 3, **caractérisé en ce que** l'arbre de transmission (76) comporte un pignon qui coopère avec une crémaillère du pêne de fixation (58) pour commander le coulissement du pêne de fixation (58).

7. Dispositif (10) selon la revendication 3, **caractérisé en ce que** l'arbre de transmission (76) est un arbre coudé qui est articulé au pêne de fixation (58) par l'intermédiaire d'une bielle pour transformer un mouvement de rotation de l'arbre de transmission (76) en mouvement de coulissement du pêne de fixation (58).

8. Dispositif (10) selon l'une quelconque des revendications 2 à 7, **caractérisé en ce que** les moyens de commande comportent au moins une poignée (84) qui est destinée à être actionnée manuellement par un opérateur pour commander le coulissement de chaque pêne de fixation (58) entre ses deux positions.

9. Dispositif selon la revendication précédente prise en combinaison avec l'une quelconque des revendication 3 à 7, **caractérisé en ce que** chaque poignée (84) est formée par un bras qui est orthogonal à l'arbre de transmission (76) et qui est fixé à une extrémité de l'arbre de transmission (76) associé.

10. Dispositif (10) selon l'une quelconque des revendications précédentes, **caractérisé en ce qu'**il comporte au moins deux pênes de fixation (58) qui sont montés coulissant en bordure du premier bord (44) de l'entrée du logement (38).

11. Dispositif (10) selon la revendication précédente prise en combinaison avec l'une quelconque des revendications 3 à 9, **caractérisé en ce que** tous les pênes de fixation (58) du premier bord (44) sont commandés en coulissement par un premier arbre commun de transmission (76).

12. Dispositif (10) selon la revendication précédente, **caractérisé en ce qu'**il comporte au moins une patte de blocage (52) du demi-moule (14) en position montée qui est portée de manière fixe par le porte-moule (32) en bordure du deuxième bord (46) opposé de l'entrée du logement (38).

13. Dispositif (10) selon l'une quelconque des revendications 11 ou 12, **caractérisé en ce qu'**il comporte au moins deux autres pênes de fixation (58) escamotables qui sont montés coulissant en bordure du deuxième bord (46) opposé de l'entrée du logement (38).

14. Dispositif (10) selon la revendication précédente prise en combinaison avec l'une quelconque des revendications 3 à 9, **caractérisé en ce que** tous les pênes de fixation (58) du deuxième bord (46) sont commandés en coulissement par un deuxième arbre commun de transmission (76).

15. Dispositif (10) selon l'une quelconque des revendications précédentes, **caractérisé en ce qu'**au moins un pêne de fixation (58) est formé par une bille.

16. Dispositif (10) selon l'une quelconque des revendications précédentes, **caractérisé en ce qu'**il comporte un dispositif de sûreté (90) qui verrouille les pênes de fixation (58) dans leur position active.

## Patentansprüche

1. Formvorrichtung (10) für eine Maschine zur Herstellung von Behältern, insbesondere Flaschen, aus Kunststoff durch Blasformen oder Zieh-BlasFormen einer Vorform, wobei die Formvorrichtung (10) umfasst:
- zwei Halbschalen (14), die jeweils mit einem Halbstempel (16) versehen sind und die jeweils eine vordere Verbindungsfläche (18) und eine Rückseite (20) umfassen;
- zwei Schalenträger (32), die jeweils mit einer Lagerung (38) versehen sind, die dazu bestimmt ist, eine zugehörige Halbschale (14) in einer angehobenen Position aufzunehmen, in der die Rückseite (20) der Halbschale (14) mit dem Boden (40) der Lagerung (38) in Kontakt ist, und
- mindestens einen einziehbaren Befestigungsriegel (58), der gleitend in mindestens einem Schalenträger (32) zwischen einer aktiven Position, in der er ausgefahren ist, um die zugehörige Halbschale (14) in angehobener Position abnehmbar bei Befestigung am Boden (40) der zugehörigen Lagerung (38) durch Abstützen mindestens einer Feststellfläche (60) jedes Befestigungsriegels (58) an einer zugehörigen Befestigungsfläche (56) der Halbschale (14) zu befestigen, und einer eingezogenen Position, in der er die Halbschale (14) freigibt, montiert ist,
- jeder Befestigungsriegel (58) umfasst eine Befestigungsrampe (74), die geneigt ist, um die Halbschale (14) am Boden (40) der Lagerung (38) beim Gleiten des Befestigungsriegels (58) von seiner eingezogenen Position in seine aktive Position abzustützen;
**dadurch gekennzeichnet, dass** die Lagerung (38) einen Eingang umfasst, der sich in einer Querebene erstreckt und quer durch einen ersten Vertikalrand (44) und durch einen zweiten Vertikalrand (46) begrenzt ist,
und dass jeder Befestigungsriegel (58) zwischen seiner aktiven Position, in der der Befestigungsriegel (58) durch den Eingang der Lagerung (38) vorspringend ist, und seiner eingezogenen Position, in der er zur Gänze in Bezug zum Eingang der Lagerung (38) zurückgezogen ist, quer gleitend montiert ist.

2. Vorrichtung (10) nach dem vorhergehenden Anspruch, **dadurch gekennzeichnet, dass** das Gleiten jedes Befestigungsriegels (58) durch in den Formträger (32) integrierte Steuermittel gesteuert wird.

3. Vorrichtung (10) nach dem vorhergehenden Anspruch, **dadurch gekennzeichnet, dass** die Steuermittel umfassen:
- mindestens eine vertikale Übertragungswelle (76), die drehbar in dem Formträger (32) montiert ist; und
- Mittel (80, 82) zur Umformung der Drehbewegung der Übertragungswelle (76) in eine Gleitbewegung mindestens eines Befestigungsriegels (58).

4. Vorrichtung (10) nach dem vorhergehenden Anspruch, **dadurch gekennzeichnet, dass** die Übertragungswelle (76) mit mindestens einem Befestigungsriegel (58) durch einen Exzentermechanismus (80, 82) verbunden ist, der eine Drehbewegung der Übertragungswelle (76) in eine Gleitbewegung des Befestigungsriegels (58) umformt.

5. Vorrichtung (10) nach dem vorhergehenden Anspruch, **dadurch gekennzeichnet, dass** die Übertragungswelle (76) mit dem Befestigungsriegel (58) durch einen Exzentermechanismus mit Rahmen (80, 82) verbunden ist.

6. Vorrichtung (10) nach Anspruch 3, **dadurch gekennzeichnet, dass** die Übertragungswelle (76) ein Ritzel umfasst, das mit einer Zahnstange des Befestigungsriegels (58) zusammenwirkt, um das Gleiten des Befestigungsriegels (58) zu steuern.

7. Vorrichtung (10) nach Anspruch 3, **dadurch gekennzeichnet, dass** die Übertragungswelle (76) eine geknickte Welle ist, die am Befestigungsriegel (58) mit Hilfe einer Stange angelenkt ist, um eine Drehbewegung der Übertragungswelle (76) in eine Gleitbewegung des Befestigungsriegels (58) umzuformen.

8. Vorrichtung (10) nach einem der Ansprüche 2 bis 7, **dadurch gekennzeichnet, dass** die Steuermittel mindestens einen Griff (84) umfassen, der dazu bestimmt ist, manuell durch einen Bediener gesteuert zu werden, um das Gleiten jedes Befestigungsriegels (58) zwischen seinen beiden Positionen zu steuern.

9. Vorrichtung nach dem vorhergehenden Anspruch in Kombination mit einem der Ansprüche 3 bis 7, **dadurch gekennzeichnet, dass** jeder Griff (84) von einem Arm gebildet ist, der zur Übertragungswelle (76) orthogonal ist und an einem Ende der zugehörigen Übertragungswelle (76) befestigt ist.

10. Vorrichtung (10) nach einem der vorhergehenden Ansprüche, **dadurch gekennzeichnet, dass** sie mindestens zwei Befestigungsriegel (58) umfasst, die an der Umrandung des ersten Randes (44) des Eingangs der Lagerung (38) gleitend montiert sind.

11. Vorrichtung (10) nach dem vorhergehenden Anspruch in Kombination mit einem der Ansprüche 3 bis 9, **dadurch gekennzeichnet, dass** alle Befestigungsriegel (58) des ersten Randes (44) durch eine erste gemeinsame Übertragungswelle (76) gleitend gesteuert werden.

12. Vorrichtung (10) nach dem vorhergehenden Anspruch, **dadurch gekennzeichnet, dass** sie mindestens eine Feststellklaue (52) für die Halbschale (14) in der angehobenen Position umfasst, die fest von dem Formträger (32) an der Umrandung des zweiten Randes (46) gegenüber dem Eingang der Lagerung (38) getragen wird.

13. Vorrichtung (10) nach einem der Ansprüche 11 oder 12, **dadurch gekennzeichnet, dass** sie mindestens zwei weitere einziehbare Befestigungsriegel (58) umfasst, die an der Umrandung des zweiten Randes (46) gegenüber dem Eingang der Lagerung (38) gleitend montiert sind.

14. Vorrichtung (10) nach dem vorhergehenden Anspruch in Kombination mit einem der Ansprüche 3 bis 9, **dadurch gekennzeichnet, dass** alle Befestigungsriegel (58) des zweiten Randes (46) durch eine zweite gemeinsame Übertragungswelle (76) gleitend gesteuert werden.

15. Vorrichtung (10) nach einem der vorhergehenden Ansprüche, **dadurch gekennzeichnet, dass** mindestens ein Befestigungsriegel (58) von einer Kugel gebildet ist.

16. Vorrichtung (10) nach einem der vorhergehenden Ansprüche, **dadurch gekennzeichnet, dass** sie eine Sicherheitsvorrichtung (90) umfasst, die die Befestigungsriegel (58) in ihrer aktiven Position verriegelt.

## Claims

1. Molding device (10) for a machine for producing thermoplastic material containers, notably bottles, by blowing or drawing-blowing a preform, the molding device (10) including:
- two half-molds (14) each of which is provided with a half-imprint (16) and each of which includes a front joint face (18) and a rear face (20);
- two mold-carriers (32) each of which is provided with a recess (38) intended to receive an associated half-mold (14) in a mounted position in which the rear face (20) of the half-mold (14) is in contact with the bottom (40) of the recess (38); and
- at least one retractable fixing bolt (58) that is slidably mounted in at least one mold-carrier (32) to slide between an active position in which it is extended to fix in demountable manner the associated half-mold (14) in the mounted position clamped against the bottom (40) of the associated recess (38) by at least one locking face (60) of each fixing bolt (58) bearing against an associated fixing face (56) of the half-mold (14), and a retracted position in which it releases the half-mold (14),
- each fixing bolt (58) includes a clamping ramp (74) that is inclined in such a manner as to press the half-mold (14) against the bottom (40) of the recess (38) on sliding of said fixing bolt (58) from its retracted position to its active position,
**characterized in that** the recess (38) has an entry in a transverse plane that is delimited transversely by a vertical first edge (44) and a vertical second edge (46),
and **in that** each fixing bolt (58) is mounted to slide transversely between its active position in which said fixing bolt (58) projects through the entry of the recess (38) and its retracted position in which it is completely retracted relative to the entry of the recess (38).

2. Device (10) according to the preceding claim, **characterized in that** the sliding of each fixing bolt (58) is driven by drive means integrated into the mold-carrier (32).

3. Device (10) according to the preceding claim, **characterized in that** the drive means include:
- at least one vertical transmission shaft (76) that is rotatably mounted in the mold-carrier (32); and
- means (80, 82) for transforming rotation movement of the transmission shaft (76) into sliding movement of at least one fixing bolt (58).

4. Device (10) according to the preceding claim, **characterized in that** the transmission shaft (76) is connected to at least one fixing bolt (58) by a cam mechanism (80, 82) that transforms rotation movement of the transmission shaft (76) into sliding movement of said fixing bolt (58).

5. Device (10) according to the preceding claim, **characterized in that** the transmission shaft (76) is connected to said fixing bolt (58) by a cam and frame mechanism (80, 82).

6. Device (10) according to claim 3, **characterized in that** the transmission shaft (76) includes a pinion that cooperates with a rack of the fixing bolt (58) to drive sliding of the fixing bolt (58).

7. Device (10) according to claim 3, **characterized in that** the transmission shaft (76) is a cranked shaft that is articulated to the fixing bolt (58) by a link for transforming rotation movement of the transmission shaft (76) into sliding movement of the fixing bolt (58).

8. Device (10) according to any one of claims 2 to 7, **characterized in that** the drive means include at least one handle (84) that is intended to be actuated manually by an operator to drive sliding of each fixing bolt (58) between its two positions.

9. Device according to the preceding claim in combination with any one of claims 3 to 7, **characterized in that** each handle (84) is formed by an arm that is orthogonal to the transmission shaft (76) and is fixed to one end of the associated transmission shaft (76).

10. Device (10) according to any one of the preceding claims, **characterized in that** it includes at least two fixing bolts (58) that are slidably mounted at the border of the first edge (44) of the entry of the recess (38).

11. Device (10) according to the preceding claim in combination with any one of claims 3 to 9, **characterized in that** sliding of all the fixing bolts (58) of the first edge (44) is driven by a common first transmission shaft (76).

12. Device (10) according to the preceding claim, **characterized in that** it includes at least one lug (52) for locking the half-mold (14) in the mounted position that is carried in fixed manner by the mold-carrier (32) at the border of the opposite second edge (46) of the entry of the recess (38).

13. Device (10) according to either of claims 11 or 12, **characterized in that** it includes at least two other retractable fixing bolts (58) that are slidably mounted at the border of the opposite second edge (46) of the entry of the recess (38).

14. Device (10) according to the preceding claim in combination with any one of claims 3 to 9, **characterized in that** sliding of all the fixing bolts (58) of the second edge (46) is driven by a common second transmission shaft (76).

15. Device (10) according to any one of the preceding claims, **characterized in that** at least one fixing bolt (58) is formed by a ball.

16. Device (10) according to any one of the preceding claims, **characterized in that** it includes a safety device (90) that locks the fixing bolts (58) in their active position.
